# EUROPÄISCHE PATENTSCHRIFT

(11) **EP 2 123 526 B1**
(45) Veröffentlichungstag und Bekanntmachung des Hinweises auf die Patenterteilung: **02.11.2016**
(21) Anmeldenummer: 09160780.4
(22) Anmeldetag: 20.05.2009
(51) Int. Cl.: B60S 5/06

(54) **Batterieblock-Wechseladapter, Batteriewechselsystem und Verfahren zum Batteriewechsel**
Battery block changing adapter, battery changing system and battery changing method
Adaptateur interchangeable de bloc de batterie, système de changement de batterie et méthode de remplacement de batterie

(30) Priorität: 23.05.2008 DE 102008024729; 12.11.2008 DE 102008056895
(43) Veröffentlichungstag der Anmeldung: 25.11.2009
(73) Patentinhaber: Jungheinrich Aktiengesellschaft, 22047 Hamburg (DE)
(72) Erfinder: Bögelein, Rolf, 74564 Crailsheim (DE); Zeidler, Christoph, 84032 Landshut (DE); Hatzl, Franz, 84098 Hohenthann (DE); Plastinin, Oleg, 84028 Landshut (DE)
(74) Vertreter: Weickmann & Weickmann PartmbB

(56) Entgegenhaltungen:
- EP-A1- 0 030 928
- JP-A- 2006 096 148
- US-A- 5 360 307
- US-A1- 2004 157 117
- US-A1- 2005 121 241

## Beschreibung

Die vorliegende Erfindung betrifft einen Batterieblock-Wechseladapter zur Aufnahme eines aus einem Batteriefach eines Flurförderzeugs herauszuziehenden Batterieblocks oder zur Bereitstellung eines in das Batteriefach einzuschiebenden Batterieblocks, wobei der Wechseladapter mittels am Wechseladapter und am Flurförderzeug vorgesehenen, miteinander zusammenwirkenden Ausrichtmitteln in einer vorbestimmten Stellung für einen Batteriewechselbetrieb relativ zum Flurförderzeug ausrichtbar ist, wobei der Wechseladapter im Batteriewechselbetrieb mit dem Flurförderzeug mittels einer ersten Kopplungsvorrichtung koppelbar ist.

Ferner betrifft die Erfindung ein Batteriewechselsystem, umfassend wenigstens ein erstes Flurförderzeug, wenigstens einen Batterieblock, der in ein Batteriefach des ersten Flurförderzeugs einschiebbar oder eingeschoben ist, wobei das Batteriefach wenigstens eine seitliche Zugriffsöffnung zum Einschieben des Batterieblocks mit einem ersten Ende voraus in das Batteriefach und zum Herausziehen des Batterieblocks mit seinem ersten Ende hintan aus dem Batteriefach aufweist, wobei der im Batteriefach aufgenommene Batterieblock in der Nähe seines ersten Endes mit wenigstens einem Rollkörper auf dem Boden des Batteriefachs abstützbar ist, und wenigstens eine Transporteinrichtung, auf welcher der Batterieblock aufnehmbar und vom bzw. zum Flurförderzeug bewegbar ist.

Ein Batteriewechselsystem der genannten Art ist in der früheren Patentanmeldung DE 10 2007 031 149.6 der Anmelderin beschrieben, wobei das dort beanspruchte und hier in Fig. 11 dargestellte Flurförderzeug 112 am Batterieblock 114 einen nach unten abstehenden Vorsprung 111 als Hubanschlag für ein Batterietransportgerät, insbesondere Gabelhubgerät, zum Wechseln des Batterieblocks aufweist. Der Vorsprung 111 steht an einem dem ersten Ende entgegengesetzten zweiten Ende 140 über einen nahe der Zugriffsöffnung 118 liegenden vorderen Randabschnitt des Batteriefachbodens 148 hinweg und über die Unterseite des Batteriefachbodens 148 hinaus ab.

Dabei wird folgende Vorgehensweise beim Wechseln des Batterieblocks ermöglicht:
Ein Handgabelhubwagen wird mit seinen Gabelzinken unter das Flurförderzeug 112 geschoben, so dass die Gabelzinken durch Anheben den nach unten abstehenden Hubanschlag 111 des Batterieblocks 114 untergreifen und schließlich den Batterieblock 114 an dessen zweitem Ende 140 so weit anheben können, dass dieser auf dem Batteriefachboden 148 nur noch mit dem Rollkörper aufsteht. Ein Zurückziehen des Gabelhubwagens führt dann zum Herausrollen des Batterieblocks 114 aus dem Batteriefach 116, bis schließlich die Gabelzinken den Batterieblock vollständig aufnehmen können. Der Batterieblock kann dann mit dem Gabelhubwagen vom Flurförderzeug entfernt werden. Allerdings weist das Batteriefach Anschlagmittel auf, die den Batterieblock beim Herausziehen aus dem Batteriefach stoppen, bevor der wenigstens eine Rollkörper beim Herausrollen den Batteriefachboden verlässt. Diese Anschlagmittel können durch weiteres Anheben und Herausziehen des Batterieblocks aus dem Batteriefach überwunden werden.

Die US 5,360,307 A beschreibt ein batteriebetriebenes Fahrzeug mit einer frontseitigen Batteriefachöffnung für das Einführen eines Batterieblocks ins Batteriefach bzw. für das Herausbringen des Batterieblocks aus dem Batteriefach. Für den Batteriewechsel ist ein Handwagen vorgesehen, der an die Vorderseite des Fahrzeugs heranzuführen ist, wobei die Ausrichtung des Handwagens relativ zur Batteriefachöffnung durch entsprechende Steuermanöver der Bedienungsperson des Handwagens vorgenommen werden muss. Kommt der Handwagen in die gewünschte Ausrichtstellung zum Batteriefach, so können an der Handwagenvorderseite nach vorn abstehende, federvorgespannte Kopplungshaken bei unmittelbarer Annäherung des Handwagens an das Fahrzeug in Verriegelungslöcher des Fahrzeugs einschnappen und so eine Kopplung zwischen Handwagen und Fahrzeug herzustellen. Sodann kann der eigentliche Batterietransfer stattfinden, wobei ein auf Laufrollen abgestützter Batterieblock vom Handwagen in das Batteriefach des Fahrzeugs schiebbar bzw. aus dem Batteriefach heraus auf den Handwagen ziehbar ist. Zur Entriegelung der Kopplung zwischen Handwagen und Fahrzeug hat die Bedienungsperson einen gesonderten Hebel an der Rückseite des Handwagens zu betätigen, wonach der Handwagen dann vom Fahrzeug entfernt werden kann. Beim Einschieben des Batterieblocks von dem zunächst manuell zum Batteriefach ausgerichteten Handwagens gelangt der Batterieblock an Flächen des Batteriefachs des Fahrzeugs geführt in die vorbestimmte Betriebsstellung.

Ein derartiges Batteriewechselsystem erfordert somit zur Überwindung der Anschlagmittel ein weiteres Anheben mittels des Handgabelhubwagens.

Aus der JP 2006 096 148 A ist ein auf einem Hubmechanismus mit Gabeln transportierter Wechseladapter bekannt, wobei der Wechseladapter Rollen aufweist, auf denen die Batterie nach Einstellung des Hubmechanismus auf eine geeignete Höhe beim Batteriewechsel rollt. Ein derartiges Batteriewechselsystem weist keine die Position der Batterie sicherende vordere Anschlagmittl auf.

Aufgabe der Erfindung ist es, ein Batteriewechselsystem bereitzustellen, bei dem der Batteriewechsel weiter unter Wahrung einer stabilen Positionierung der Batterie vereinfacht ist.

Hierzu wird für das erfindungsgemäße Batteriewechselsystem vorgeschlagen, dass die Transporteinrichtung des Batteriewechselsystems einen erfindungsgemäßen Wechseladapter umfasst, der mittels am Wechseladapter und am Flurförderzeug angeordneten, miteinander zusammenwirkenden Ausrichtmitteln in einer vorbestimmten Stellung für einen Batteriewechselbetrieb relativ zum Flurförderzeug ausrichtbar ist, wobei der Wechseladapter insbesondere in eine obere Anschlagstellung anhebbar ist Als Ausrichtmittel können dabei beispielsweise Ränder, Kanten, Vorsprünge oder sonstige Bauteile dienen, die eine Bestimmung und Einstellung einer gewünschten Relativposition des Wechseladapters zum Flurförderzeug ermöglichen.

Da das Batteriewechselsystem den erfindungsgemäßen Batterieblock-Wechseladapter der Eingangs genannten Art umfasst, ist eigenständiger Gegenstand der vorliegenden Anmeldung der erfindungsgemäße Batterieblock-Wechseladapter. Da das erfindungsgemäße Batteriewechselsystem den erfindungsgemäßen Batterieblock-Wechseladapter umfasst, sind nachfolgend aufgeführte bevorzugte Weiterbildungen des Wechseladapters sowohl für diesen selbst als auch für das erfindungsgemäß den Wechseladapter verwendende Batteriewechselsystem anwendbar.

In Bezug auf den Wechseladapter der Eingangs genannten Art wird vorgeschlagen, dass die erste Kopplungsvorrichtung zur Kopplung des Wechseladapters mit dem Flurförderzeug derart ausgeführt ist, dass die Kopplung beim Anheben des Wechseladapters relativ zum den Batterieblock tragenden Boden des Flurförderzeugs herstellbar und beim Absenken des Wechseladapters lösbar ist, wobei der Wechseladapterwenigstens einen Zentrierbolzen als Komponente der ersten Kopplungsvorrichtung umfasst, der beim Anheben in eine entsprechende Öffnung im Boden des Flurförderzeugs, insbesondere im Boden des Batteriefachs, eingreiftführbar ist.

Der Wechseladapter wird im Batteriewechselbetrieb mit dem Flurförderzeug mittels einer ersten Kopplungsvorrichtung gekoppelt wobei die Ausrichtmittel als erste Kopplungsvorrichtung dienen. Eine erste Kopplungsvorrichtung stellt im Batteriewechselbetrieb eine Verbindung zwischen dem Wechseladapter und dem Flurförderzeug her, so dass sie gemeinsam als ortsfeste Komponenten dienen, relativ zu denen der Batterieblock bewegt werden kann. Die aus den Ausrichtmitteln gebildete erste Kopplungsvorrichtung ermöglicht eine konstruktiv einfache Lösung, wobei beim Herstellen der Kopplung nacheinander oder auch gleichzeitig sowohl das Ausrichten des Wechseladapters relativ zum Flurförderzeug erfolgt als auch die Verbindung zwischen diesen beiden Komponenten hergestellt werden kann.

Die erste Kopplungsvorrichtung zur Kopplung des Wechseladapters mit dem Flurförderzeug ist derart ausgeführt, dass die Kopplung beim Anheben des Wechseladapters relativ zum den Batterieblock tragenden Boden des Flurförderzeugs herstellbar und beim Absenken des Wechseladapters lösbar ist. Erfindungsgemäß umfasst die erste Kopplungsvorrichtung wenigstens einen Zentrierbolzen am Wechseladapter der beim Anheben in eine entsprechende Öffnung im Boden des Flurförderzeugs, insbesondere im Boden des Batteriefachs, eingreifen kann. Um die Ausrichtung des Wechseladapters relativ zum Flurförderzeug zu erreichen, wird vorgeschlagen, dass im Bereich der Öffnung im Batteriefachboden nach unten vorstehende Zentriermittel vorgesehen sind, durch die der Zentrierbolzen in die Öffnung führbar ist. Hierdurch erfolgt eine Art Zwangszentrierung des Wechseladapters relativ zum Flurförderzeug.

Der Wechseladapter ist vorzugsweise derart ausgestaltet, dass im Batteriewechselbetrieb, also im ausgerichteten und vorzugsweise gekoppelten Zustand des Wechseladapters relativ zum Flurförderzeug, beim Bewegen des Batterieblocks aus dem Batteriefach heraus auf den Wechseladapter und vom Wechseladapter in das Batteriefach hinein ein im Batteriefach angeordneter Sicherungsanschlag überwindbar ist. Somit kann durch den Wechseladapter ermöglicht werden, dass der Batterieblock ohne weiteres Anheben direkt aus dem Batteriefach auf den Wechseladapter oder in umgekehrter Richtung bewegt werden kann.

Weiterbildend wird vorgeschlagen, dass der Wechseladapter wenigstens eine Führungsbahn umfasst, welche die Bewegung von dem Batterieblock zugeordneten Rollkörpern aus dem bzw. in das Batteriefach führt, wobei vorzugsweise zwei seitlich im Abstand voneinander angeordnete Führungsbahnen vorgesehen sind, auf denen Rollkörper des Batterieblocks bewegbar sind.

Der Wechseladapter kann zur Sicherung eines aufgenommenen Batterieblocks eine lösbare Arretierung aufweisen, welche in Eingriff mit dem Batterieblock bringbar ist oder steht. Vorzugsweise kann am Wechseladapter auch ein Endanschlag vorgesehen sein, der insbesondere die Arretierung umfasst, wobei dieser Endanschlag so angeordnet und ausgeführt ist, dass der Batterieblock vollständig auf dem Wechseladapter aufgenommen werden kann.

Beim Batteriewechselsystem wird ferner vorgeschlagen, dass der Batterieblock an einem dem ersten Ende entgegengesetzten zweiten Ende wenigstens einen weiteren Rollkörper umfasst, der im eingeschobenen Zustand des Batterieblocks über die Oberseite des Batteriefachbodens nach unten vorsteht und als Hubanschlag für den Wechseladapter zum Anheben und Herausziehen des Batterieblocks vorgesehen ist.

Bevorzugt umfasst das Batteriewechselsystem einen den Batterieblock tragenden und gemeinsam mit dem Batterieblock bewegbaren Schubrahmen, der die Rollkörper aufweist, wobei der Schubrahmen vorzugsweise eine vom Batterieblock gesonderte Komponente darstellt, die eine Art Wagen bildet, von dem der Batterieblock bedarfsweise entfernbar ist, beispielsweise dadurch, dass der Batterieblock mittels eines Hebezeugs aus dem Schubrahmen heraus angehoben und entfernt wird.

Gemäß einer bevorzugten Weiterbildung sind als Rollkörper sowohl am ersten Ende als auch am zweiten Ende des Batterieblocks bzw. des Schubrahmens jeweils wenigstens zwei Rollen in seitlichem Abstand voneinander vorgesehen. Dies ermöglicht es, dass der Batterieblock im Batteriewechselbetrieb auf wenigstens vier Rollen stabil abgestützt ist.

Bevorzugt ist am ersten und am zweiten Ende des Batterieblocks ein jeweiliges Rollenpaar vorgesehen, wobei die Rollen der beiden Rollenpaare den gleichen seitlichen Abstand voneinander aufweisen und bezogen auf den Schubrahmen an gleichen seitlichen Positionen angeordnet sind. Somit fluchten jeweils zwei Rollen der beiden Paare in Bewegungsrichtung des Batterieblocks. Die beiden Rollenpaare bilden bezogen auf die seitliche Ausdehnung innere Rollenpaare und weiterbildend wird vorgeschlagen, dass am ersten Ende ein weiteres äußeres Rollenpaar vorgesehen ist, dessen Rollen jeweils weiter außen am Schubrahmen bzw. am Batterieblock vorgesehen sind, insbesondere in dessen Eckbereichen.

Im Batteriewechselbetrieb und bei in das Batteriefach eingeschobenem Batterieblock ist der Batterieblock vorzugsweise mit dem äußeren Rollenpaar des ersten Endes am Batteriefach und mit dem inneren Rollenpaar des zweiten Endes am Wechseladapter abgestützt. Dies ermöglicht das Herausziehen des Batterieblocks aus dem Batteriefach, wobei die Bewegung durch Abrollen des inneren Rollenpaars des zweiten Endes und des äußeren Rollenpaars des ersten Endes erfolgt.

Um eine präzise Bewegung des Batterieblocks zu ermöglichen, wird vorgeschlagen, dass im Batteriefach und am Wechseladapter Führungsbahnen vorgesehen sind, auf denen jeweilige Rollen eines betreffenden Rollenpaares des Batterieblocks abrollbar sind, so dass der Batterieblock im Batteriewechselbetrieb entlang den Führungsbahnen zwischen Batteriefach und Wechseladapter beweglich ist.

Vorzugsweise sind die Führungsbahnen, insbesondere diejenigen am Wechseladapter, derart ausgebildet, dass beim Bewegen des Batterieblocks ein im Batteriefach angeordneter Sicherungsanschlag überwindbar ist. Hierzu können die im Batteriewechselbetrieb dem Batteriefach zugewandten Endabschnitte der Führungsbahnen des Wechseladapters in Richtung vom Batteriefach weg ansteigend und anschließend im Wesentlichen horizontal ausgeführt sein, derart, dass im Batteriewechselbetrieb der Batterieblock auf dem Wechseladapter höher liegt als im Batteriefach, wodurch der angesprochene Sicherungsanschlag im Batteriefach überwunden werden kann. Gemäß einer Weiterbildung weisen die Führungsbahnen gegenüber dem Batteriefachboden und dem Wechseladapterboden erhabene Führungsprofile auf, und die Rollen weisen am Rollenumfang umlaufende, konkave Führungsrillen auf, in welche die Führungsprofile der Führungsbahnen beim Bewegen des Batterieblocks eingreifen. Derartige erhabene Führungsprofile sind insoweit selbstreinigend, als auf ihnen kein oder nur wenig Schmutz abgelagert wird, so dass das Batteriewechselsystem wartungsarm betrieben werden kann.

Im Batteriefach sind bevorzugt Führungsbahnen für das äußere Rollenpaar des ersten Endes vorgesehen, auf denen der Batterieblock beim Bewegen abrollbar ist und im eingeschobenen Zustand abgestützt ist, wobei das innere Rollenpaar des ersten Endes, das zwischen den beiden Rollen des äußeren Rollenpaars angeordnet ist, frei schwebend über dem Batteriefachboden angeordnet ist. Aufgrund der Abstützung des Batterieblocks auf den äußeren beiden Rollen ist eine sehr stabile Lagerung des Batterieblocks während des Bewegens und im eingeschobenen Zustand im Batteriefach gewährleistet.

Die Führungsbahnen des Batteriefachs und die Führungsbahnen des Wechseladapters können im Batteriewechselbetrieb in Batteriebewegungsrichtung einen Überlappungsbereich aufweisen, derart, dass beim Herausziehen des Batterieblocks aus dem Batteriefach die Abstützung des Batterieblocks im Überlappungsbereich von dem äußeren Rollenpaar auf das innere Rollenpaar des ersten Endes übergeht, wobei das äußere Rollenpaar von den Batteriefachführungsbahnen abgehoben wird. Bei dieser anhebenden Bewegung wird ferner auch der zuvor erwähnte Sicherungsanschlag überwunden, der beispielsweise in Richtung des Herausziehens des Batterieblocks an den Enden der Batteriefachführungsbahnen angeordnet sein kann.

Um das Anheben des inneren Rollenpaares am zweiten Ende des Batterieblocks zu ermöglichen und zu vereinfachen, wird vorgeschlagen, dass der Batteriefachboden im Bereich der Zugriffsöffnung einen Ausschnitt hat, der den vorderen Randabschnitt des Batteriefachbodens aufweist, so dass der Rollkörper bzw. das innere Rollenpaar des zweiten Endes bei eingeschobenem Batterieblock durch den Ausschnitt nach unten absteht. In diesem Zusammenhang wird ferner vorgeschlagen, dass der Wechseladapter eine in den Ausschnitt des Batteriefachbodens einführbare Lasche aufweist, derart, dass im Batteriewechselbetrieb und bei eingeschobenem Batterieblock der Rollkörper bzw. das innere Rollenpaar des zweiten Endes des Batterieblocks durch die Lasche abgestützt ist. Dabei ist das innere Rollenpaar des zweiten Endes bevorzugt auf den auf der Lasche angeordneten Endabschnitten der Führungsbahnen des Wechseladapters abgestützt.

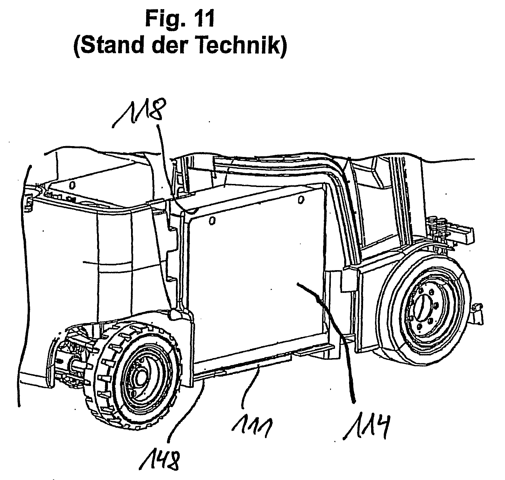

Um den Wechseladapter ggf. auch mit einem anders ausgestalteten Batterieblock, insbesondere einem Batterieblock, wie er in der einleitend beschriebenen Fig. 11 enthalten ist, verwenden zu können, kann die erste Kopplungsvorrichtung lösbar mit dem Wechseladapter verbunden sein. Dies ermöglicht ein temporäres Entfernen des Zentrierdorns, so dass der Adapter unter den Boden des Flurförderzeugs geschoben werden kann.

Es wird ferner vorgeschlagen, dass der Wechseladapter im Batteriewechselbetrieb, vorzugsweise bei vom Wechseladapter entfernter erster Kopplungsvorrichtung, mit dem Batterieblock mittels einer zweiten Kopplungsvorrichtung koppelbar ist. Hierdurch kann der Wechseladapter universell für unterschiedliche Batterieblöcke mit und ohne Rollen an ihrem zweiten Ende eingesetzt werden.

Bevorzugt ist dabei die zweite Kopplungsvorrichtung derart ausgeführt, dass die Kopplung zwischen Wechseladapter und Batterieblock beim Anheben des Wechseladapters relativ zum den Batterieblock tragenden Boden des Flurförderzeugs herstellbar ist und beim Absenken des Wechseladapters lösbar ist.

Die zweite Kopplungsvorrichtung weist vorzugsweise eine quer zur Bewegungsrichtung des Batterieblocks verlaufende Aufnahmevertiefung auf, mit welcher ein an der Unterseite des Batterieblocks vorgesehener Kopplungsvorsprung in Eingriff bringbar ist.

Ein Wechseladapter mit ersten und zweiten Kopplungsvorrichtungen, bei welchem die erste Kopplungsvorrichtung vorzugsweise abnehmbar ist, ermöglicht den universellen Einsatz dieses Wechseladapters für verschiedene Ausführungsformen von Batterieblöcken.

Der Wechseladapter kann auf einem weiteren Flurförderzeug, insbesondere einem Handgabelhubwagen oder einer Gabel eines Gabelstaplers aufgenommen sein, wobei der Wechseladapter vorzugsweise derart auf dem Lastaufnahmemittel, also der Gabel, aufgenommen ist, dass im Batteriewechselbetrieb das Lastaufnahmemittel mit vom Wechseladapter nicht bedeckten Endabschnitten an der Unterseite des Batteriefachbodens anliegt. Durch das Anliegen der Endabschnitte der Gabel an der Unterseite des Batteriefachbodens wird eine obere Anschlagstellung festgelegt, so dass der Wechseladapter nicht weiter angehoben werden kann. Ferner ermöglicht das Anschlagen der Endabschnitte der Lastgabel an der Unterseite des Batteriefachbodens auch eine Art Niveauausgleich, wenn der Untergrund nicht ganz eben ist oder wenn der Batteriefachboden aufgrund von unterschiedlich stark abgefahrenen Reifen des Flurförderzeugs nicht genau parallel zum Untergrund verläuft. Beim Anheben der Lastgabel können sich diese in ihrer Anschlagstellung an der Unterseite des Batteriefachbodens in einem gewissen Maße elastisch verformen, so dass ein Niveauausgleich zwischen Batteriefachboden und Untergrund ermöglicht ist, wodurch ein optimaler Übergang zwischen Batteriefachboden und Wechseladapter gewährleistet ist.

Es ist auch denkbar, dass der Wechseladapter fest mit dem Handhubwagen verbunden ist, so dass eine Art Adapterfahrzeug gebildet wird. Alternativ ist es auch denkbar, am Wechseladapter selbst eine Hubvorrichtung und Räder zum Bewegen des Adapters anzubringen, so dass eine Art Adapterwagen gebildet wird.

Der Wechseladapter ist ferner derart ausgebildet, dass er beispielsweise mit einem darauf aufgenommenen Batterieblock vom Flurförderzeug entfernt werden und an einer anderen Stelle vom Handgabelhubwagen abgesetzt werden kann, beispielsweise in der Nähe eines Ladegeräts, an das der Batterieblock angeschlossen werden soll.

Die Erfindung betrifft ferner ein Verfahren zum Einschieben oder Herausnehmen eines Batterieblocks auf einem Flurförderzeug in einem oben beschriebenen Batteriewechselsystem umfassend einen oben beschriebenen Wechseladapter, wobei das Verfahren die Schritte umfasst: Öffnen der Zugriffsöffnung des Batteriefachs des Flurförderzeugs; Zuführen eines erfinsungsgemäßen Wechseladapters vorzugsweise mittels eines zweiten Flurförderzeugs, insbesondere eines Handhubwagens zum Batteriefach; Ausrichten des Wechseladapters in einer vorbestimmten Relativstellung zum Flurförderzeug für den Batteriewechselbetrieb, wobei der Wechseladapter insbesondere in eine obere Anschlagstellung angehoben wird; Bewegen eines im Batteriefach aufgenommenen Batterieblocks auf den Wechseladapter oder Bewegen eines auf dem Wechseladapter aufgenommenen Batterieblocks in das leere Batteriefach; Absenken des Wechseladapters; Entfernen des Wechseladapters mit gegebenenfalls aufgenommenem Batterieblock vom Flurförderzeug.

Weiterbildend wird vorgeschlagen, dass beim Verfahren eine Kopplung zwischen dem Wechseladapter und dem Flurförderzeug hergestellt wird, welche während des Batteriewechselbetriebs wirksam ist, wobei die Kopplung vorzugsweise durch Anheben bzw. Absenken des Wechseladapters hergestellt bzw. gelöst wird.

Das vorgestellte Batteriewechselsystem ermöglicht nach Ausrichtung und vorzugsweise Kopplung zwischen Wechseladapter und Flurförderzeug ein Herausziehen oder Einschieben eines Batterieblocks aus dem bzw. in das Batteriefach, ohne dass eine weitere Hubbetätigung vorgenommen werden muss zur Überwindung eines Sicherungsanschlags. Der Batterieblock ist somit von seiner im Batteriefach eingeschobenen Stellung unterbrechungsfrei zum Endanschlag auf den Wechseladapter verfahrbar, was insbesondere die Wartung und den Austausch von solchen Batterieblöcken vereinfacht.

Die Erfindung wird nachfolgend anhand einer beispielhaften Ausführungsform unter Bezugnahme auf die anliegenden Figuren näher erläutert.
- Fig. 1: ist eine perspektivische Teildarstellung eines auf einem Handhubwagen angeordneten Wechseladapters, wobei der Handhubwagen vor einer Zugriffsöffnung eines Batteriefachs mit eingeschobenem Batterieblock steht.
- Fig. 2: ist eine vergrößerte Perspektivansicht des Handhubwagens mit Wechseladapter in ausgerichtetem und gekoppeltem Zustand am Flurförderzeug.
- Fig. 3: ist eine stark vergrößerte Ansicht von Rollen an einem ersten Ende des Batterieblocks, die auf Führungsprofilen des Adapters abgestützt sind.
- Fig. 4: ist eine perspektivische Teilschnittdarstellung entsprechend der Schnittlinie IV-IV der Fig. 3, wobei insbesondere eine Kopplungsvorrichtung ersichtlich ist.
- Fig. 5a bis 5c: sind Schnittdarstellungen entlang der Schnittlinie IV-IV der Fig. 3, wobei der Wechseladapter in Fig. 5a in einer vom Flurförderzeug gelösten Stellung dargestellt ist, in Fig. 5b und 5c im Batteriewechselbetrieb, wobei Fig. 5b den Zustand unmittelbar zu Beginn des Batteriewechselbetriebs zeigt und Fig. 5c einen zur Hälfte auf den Wechseladapter bewegten Batterieblock zeigt.
- Fig. 6: ist eine vergrößerte Querschnittsdarstellung des in Fig. 5c gestrichelt eingekreisten Bereichs VI, der die Ausrichtung zwischen Wechseladapter und Flurförderzeug bewirkende Kopplungsvorrichtung zeigt.
- Fig. 7a und 7b: zeigen ebenfalls Schnittdarstellungen entlang der Schnittlinie IV-IV der Fig. 3, wobei der Batterieblock vollständig auf dem Wechseladapter aufgenommen ist und wobei Fig. 7a den Zustand am Ende des Batteriewechselbetriebs zeigt und Fig. 7b den abgesenkten und somit vom Flurförderzeug gelösten Wechseladapter zeigt.
- Fig. 8a und 8b: zeigen zwei Zustände von am zweiten Ende des Batterieblocks angeordneten Rollenpaaren beim Übergang zwischen dem Batteriefach und dem Wechseladapter.
- Fig. 9: zeigt in schematischer Perspektivansicht eine Arretierung am Wechseladapter zur Sicherung des aufgenommenen Batterieblocks.
- Fig. 10: zeigt das Anheben des Batterieblocks aus einem auf dem Wechseladapter angeordneten Schubrahmen.
- Fig. 11: zeigt ein bekanntes Batteriewechselsystem der Anmelderin.
- Fig. 12: zeigt eine alternative Ausführungsform des Wechseladapters, die fest mit einem Handgabelhubwagen verbunden ist.
- Fig. 13: zeigt in Teilfigur a) den Wechseladapter der Fig. 12 ohne erste Kopplungsvorrichtung und in Teilfigur b) eine Vergrößerung einer zweiten Kopplungsvorrichtung.

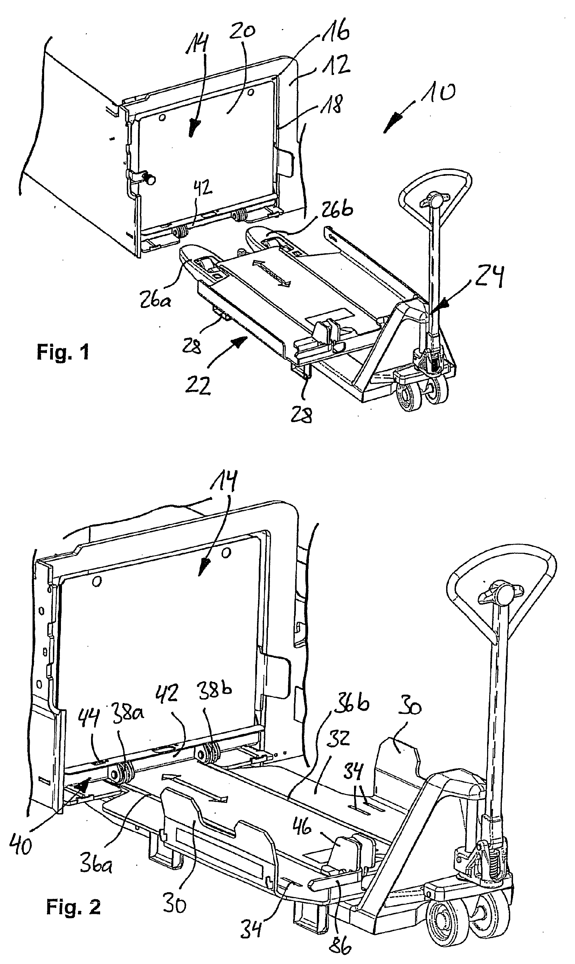

Ein in Fig. 1 gezeigtes Batteriewechselsystem 10 umfasst ein hier nur durch seine Fahrzeugrahmenkonstruktion angedeutetes Flurförderzeug 12, einen Batterieblock 14, der in ein Batteriefach 16 eingeschoben ist, wobei das Batteriefach 16 eine seitliche Zugriffsöffnung 18 zum Herausziehen bzw. Einschieben des Batterieblocks 14 aufweist. Der Batterieblock 14 umfasst im vorliegenden Beispiel einen Batterietrog 20, in dem mehrere Batterien aufgenommen und miteinander elektrisch verschaltet sind. Ferner umfasst das Batteriewechselsystem 10 einen Wechseladapter 22, der im vorliegenden Ausführungsbeispiel auf einem Handhubwagen 24 angeordnet ist und mittels des Handhubwagens 24 bewegt werden kann. Der Handhubwagen 24 weist zwei Lastgabeln 26a und 26b auf, auf denen der Wechseladapter 22 aufliegt.

Der Wechseladapter 22 weist auf jeder Seite zwei Füße 28 auf, auf denen der Wechseladapter auf einem Untergrund abgestellt werden kann. Die Füße 28 weisen eine Höhe auf, die so bemessen ist, dass die Lastgabeln 26a, 26b des Handhubwagens 24 im abgesenkten Zustand unter den Wechseladapter 22 gefahren werden können. Allerdings ist diese Höhe auch so bemessen, dass die Füße 28 durch geringfügiges Anheben der Lastgabeln 26a, 26b vom Untergrund abgehoben werden, so dass der Wechseladapter 22 in geringer Höhe über dem Untergrund auf den Lastgabeln 26a, 26b aufliegt und mittels des Handhubwagens 24 bewegt werden kann.

Aus der Fig. 2 ist ferner ersichtlich, dass der Wechseladapter 22 seitliche Begrenzungswände 30 aufweist, welche einen auf den Wechseladapter 22 aufgenommenen Batterieblock seitlich sichern und führen. Ferner sind im Boden 32 des Wechseladapters 22 Schlitze 34 ersichtlich, in die hier nicht dargestellte Seitenwandsteckelemente eingesteckt werden können, um eine seitliche Führung für einen Batterieblock geringerer Breite zu ermöglichen.

Ferner sind zwei auf dem Wechseladapter 22 angeordnete schienenartige Führungsprofile 36a, 36b ersichtlich, auf denen zwei Rollen 38a, 38b eines zweiten Endes 40 des Batterieblocks 14 abstützbar sind, wenn der Wechseladapter 22, wie in Fig. 2 dargestellt, in einer vorbestimmten Relativposition zum Flurförderzeug 12 angeordnet ist.

Der Batterieblock 14 ist in diesem Ausführungsbeispiel in einem die Rollen 38a, 38b aufweisenden Schubrahmen 42 bzw. Batteriewagen 42 aufgenommen, wobei der Batteriewagen 42 an seinem zweiten Ende 40 eine Eingriffsöffnung 44 aufweist, in die eine hakenartige Klinke einer Arretierung 46 am Wechseladapter 22 eingreifen kann, was später noch beschrieben wird.

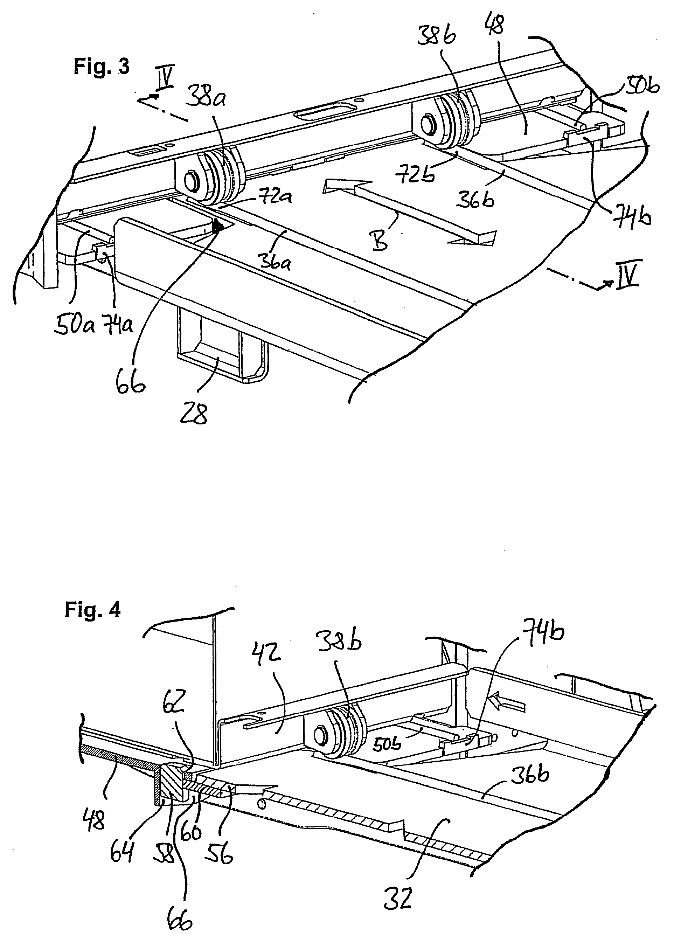

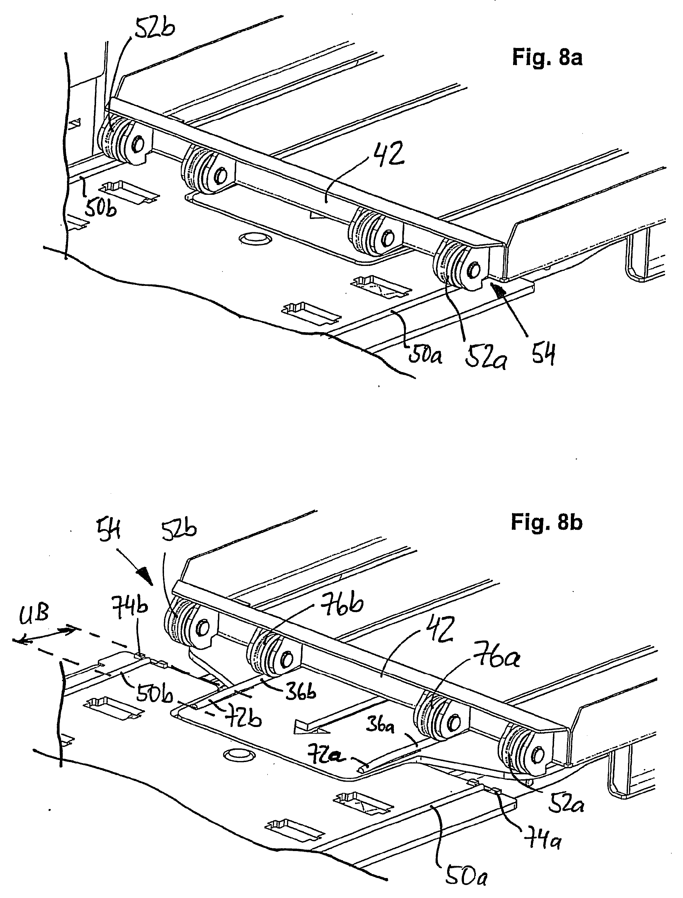

Die Fig. 3 zeigt eine vergrößerte Darstellung der Rollen 38a und 38b, die auf den Führungsprofilen 36a und 36b des Wechseladapters 22 abgestützt sind, wenn der Wechseladapter 22 im Batteriewechselbetrieb am Flurförderzeug angeordnet ist. Am Boden 48 des Batteriefachs 16 sind zwei außen liegende Führungsprofile 50a und 50b angebracht, auf denen jeweilige Rollen 52a und 52b (Fig. 8a) abgestützt und abrollbar sind, wenn der Batterieblock 14 bzw. der Batteriewagen 42 sich wenigstens teilweise im Batteriefach 16 befindet. Die ein äußeres Rollenpaar bildenden Rollen 52a und 52b sind an einem ersten Ende 54 des Batterieblocks 14 bzw. des Batteriewagens 42 angebracht.

Fig. 4 zeigt in einer perspektivischen Teilschnittdarstellung die Kopplung zwischen dem Wechseladapter 22 und dem Boden 48 des Batteriefachs 16, wobei die Schnittlinie entlang der gestrichelten Linie IV-IV der Fig. 3 gewählt ist. Der Boden 32 des Wechseladapters 22 weist in seinem dem Batteriefach zugeordneten Endbereich eine Lasche 56 auf, an welcher ein Zentrierdorn bzw. Zentrierbolzen 58 mittels eines Flansches 60 angebracht ist. Der Zentrierbolzen 58 ist im Batteriewechselbetrieb gemäß Fig. 4 in eine im Batterieboden 48 eingelassene Öffnung 62 eingeführt, deren Innendurchmesser im Wesentlichen dem Außendurchmesser des Zentrierbolzens 58 entspricht, so dass im Batteriewechselbetrieb eine feste Verbindung zwischen dem Boden 48 des Batteriefachs 16, also dem Flurförderzeug, und dem Wechseladapter 22 hergestellt werden kann. Zur Ausrichtung des Wechseladapters 22 insbesondere in horizontaler Richtung sind am Boden 48 nach unten vorstehende Zentriermittel 64 vorgesehen, die beim Heranfahren des Wechseladapters 22 einen hinteren Anschlag bilden, so dass der Wechseladapter 22 nicht weiter unter dem Flurförderzeugboden verfahren werden kann. Die Zentriermittel 64 sind als nach unten abstehende Wandabschnitte ausgeführt, wobei diese schräge Führungsflächen 66 bilden, welche das Positionieren des Zentrierbolzens 58 unterhalb der Öffnung 62 vereinfachen und unterstützen. Beim Heranfahren des Wechseladapters 22 an das Flurförderzeug erfolgt somit durch das Zusammenwirken zwischen Zentrierbolzen 58, Zentriermittel 64, 66 eine Ausrichtung des Wechseladapters 22 in einer vorbestimmten Position zum Flurförderzeug.

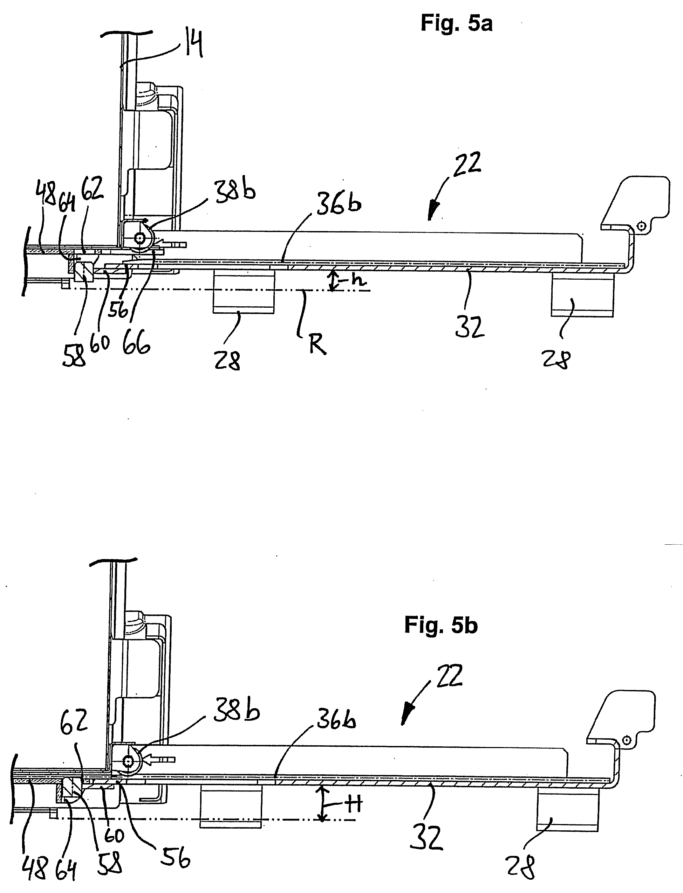

Fig. 5a zeigt den Zustand, wenn der Wechseladapter 22 mit seinem Zentrierbolzen 58 an dem Zentriermittel 64 in Anschlag ist, aber noch nicht zur Kopplung angehoben worden ist. In dieser Stellung ist der Batterieblock 14 im Batteriefach 16 eingeschoben und die Rollen 38a und 38b reichen mit ihrem Außenumfang in einen im Boden 48 des Batteriefachs ausgebildeten Ausschnitt 66 hinein, wobei der Außenumfang der Rollen 38a und 38b unterhalb der Oberseite des Batteriefachbodens 48 liegt. Die Rollen 38a und 38b stehen somit durch den Ausschnitt 66 nach unten hin ab. In der in Fig. 5a dargestellten Relativposition des Wechseladapters 22 zum Flurförderzeug befindet sich der Wechseladapter 22 mit seiner Unterseite um das Maß h oberhalb einer theoretischen Referenzlinie R, welche hier beispielhaft den tiefsten Punkt des Flurförderzeugs repräsentiert; als Bezugslinie könnte auch der Untergrund gewählt werden.

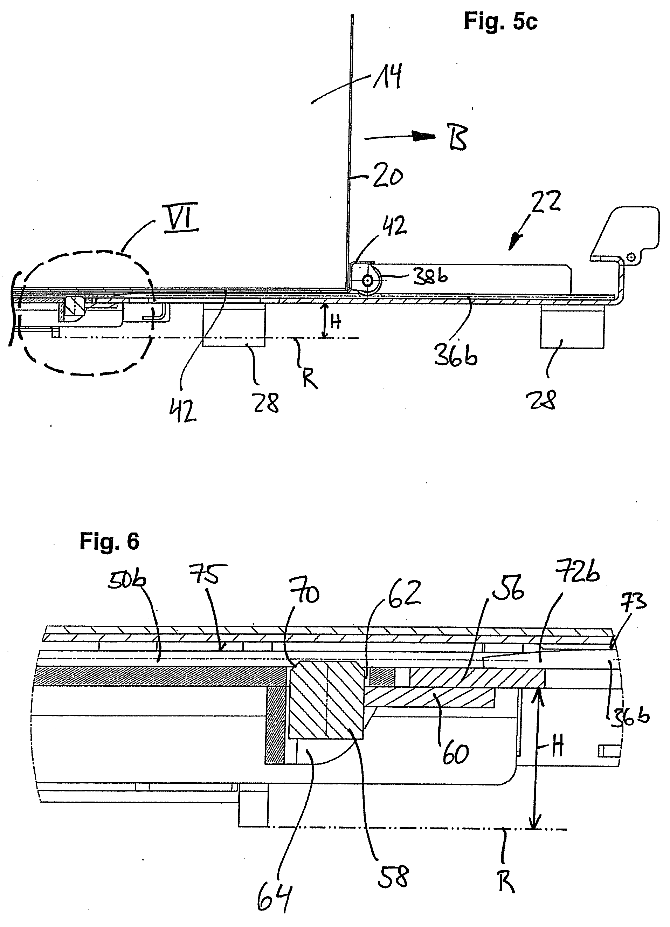

In Fig. 5b ist der Wechseladapter 22 im Batteriewechselbetrieb dargestellt. In diesem Zustand sind der Wechseladapter 22 und das Flurförderzeug bzw. der Boden 48 des Batteriefachs durch das Zusammenwirken des Zentrierbolzens 58 und der Öffnung 62 miteinander gekoppelt, so dass der Wechseladapter 22 nicht vom Flurförderzeug entfernt werden kann. Um den Zustand des Batteriewechselbetriebs zu erreichen, wird der Wechseladapter 22 mittels des Handhubwagens 24 auf die Höhe H oberhalb der theoretischen Referenzlinie R angehoben, bis die Lasche 56 in den Ausschnitt 66 eingeführt ist und mit dem Boden 48 auf etwa gleicher Höhe liegt, so dass die Oberseite des Bodens 48 und die Oberseite des Wechseladapterbodens 32 im Wesentlichen eine gemeinsame Ebene bilden. Durch das Anheben des Wechseladapters 22 vom Niveau h (Fig. 5a) auf das Niveau H (Fig. 5b) kommen die Führungsprofile 36a und 36b mit ihrer jeweiligen Rolle 38a, 38b in Berührung und heben somit den Batteriewagen 42 bzw. den Batterieblock 14 nach oben, so dass der Batterieblock 14 an seinem zweiten Ende 40 auf den Führungsprofilen 36a, 36b des Wechseladapters 22 aufliegt. In dieser Stellung kann der Batterieblock 14, der an seinem ersten Ende 54 mit den Rollen 52a und 52b auf den Führungsprofilen 50a und 50b im Batteriefach aufliegt (Fig. 8a), auf den Wechseladapter 22 herausgezogen werden, wobei dabei die Rollen 38a und b sowie 52a und b abgerollt werden. Das Herausziehen erfolgt, wie aus Fig. 5c ersichtlich, in Richtung B.

Fig. 6 zeigt einen vergrößerten Querschnitt des Kopplungsbereichs zwischen Wechseladapter 22 und Flurförderzeug gemäß eingekreistem Bereich VI der Fig. 5c. Es sind die bereits erwähnten Bestandteile Zentrierbolzen 58, Öffnung 62, Zentriermittel 64, Lasche 56 und Flansch 60 ersichtlich. Um beim Anheben des Wechseladapters 22 das Einführen des Bolzens 58 in die Öffnung 62 weiter zu erleichtern, weist der Bolzen 58 an seinem oberen Außenumfang abgeschrägte Bereiche 70 auf. Aus der Fig. 6 ist auch ersichtlich, dass Endabschnitte 72a, 72b der Führungsprofile 36a, 36b in Richtung vom Batteriefach weg ansteigend ausgeführt sind. Somit befindet sich die Oberkante 73 der Führungsprofile 36a und 36b etwas oberhalb der Oberkante 75 der Führungsprofile 50a, 50b (Fig. 8a, 8b), so dass der Batterieblock im Batteriewechselbetrieb auf dem Wechseladapter etwas höher angeordnet ist als im Batteriefach.

Wie aus den Fig. 3, 4 und 8b ersichtlich, sind im Bereich der zugriffsöffnungsseitigen Enden der Führungsprofile 50a, 50b Sicherungsanschläge 74a, 74b angeordnet, welche für die Rollen 52a, 52b als Anschlag dienen, wenn ein Batterieblock ohne Wechseladapter 22 aus dem Batteriefach herausgezogen werden soll. Diese Sicherungsanschläge 74a und 74b sind nur durch Anheben des Batterieblocks relativ zum Batteriefach zu überwinden. Beim Wechseladapter 22 erfolgt die Überwindung der Sicherungsanschläge 74a, 74b durch die ansteigenden Endabschnitte 72a, 72b der Führungsprofile 36a, 36b. Diese Endabschnitte 72a, 72b überlappen im Batteriewechselbetrieb mit den Führungsprofilen 50a, 50b, so dass beim Herausziehen des Batterieblocks aus dem Batteriefach die Abstützung des Batterieblocks in diesem Überlappungsbereich UB vom äußeren Rollenpaar 52a, 52b auf ein inneres Rollenpaar 76a, 76b am ersten Ende 54 des Batterieblocks 14 bzw. des Batteriewagens 42 übergeht, wobei das äußere Rollenpaar 52a, 52b von den Batteriefachführungsbahnen 50a, 50b abgehoben wird und über die Sicherungsanschläge 74a, 74b bewegt werden kann.

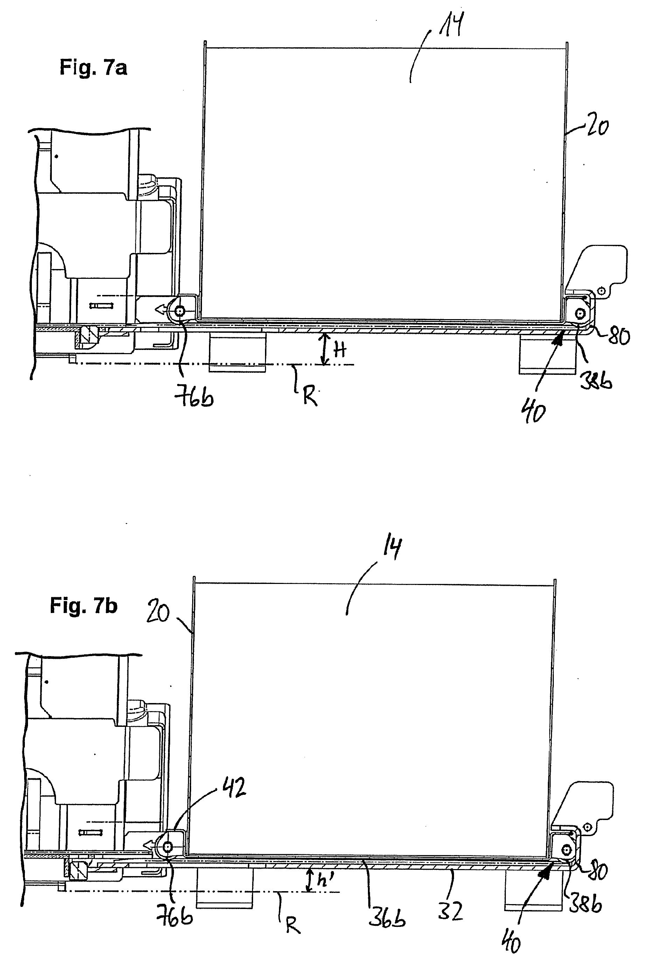

Wenn sich der Batterieblock vollständig auf dem Wechseladapter 22 befindet, wie dies in den Fig. 7a und 7b dargestellt ist, liegt er also mit den beiden Rollenpaaren 38a, 38b und 76a, 76b auf den Führungsprofilen 36a, 36b auf. Wenn der Batterieblock 14 vollständig auf den Wechseladapter 22 herausgezogen worden ist, kommt er mit seinem zweiten Ende 40, insbesondere mit den Rollen 38a, 38b mit einem vorderen Anschlag 80 in Berührung, durch den die Bewegung des Batterieblocks 14 auf dem Wechseladapter 22 gestoppt wird.

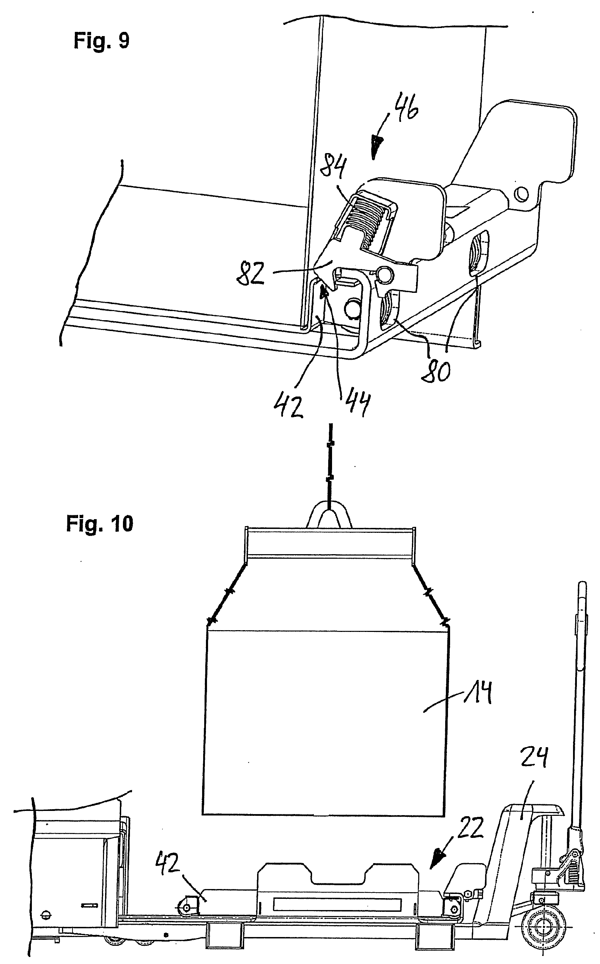

Wie bereits unter Bezugnahme auf die Fig. 2 erwähnt, ist im Bereich des vorderen Anschlags 80 eine Arretierung 46 vorgesehen, welche das Sichern des Batterieblocks auf dem Wechseladapter ermöglicht. Hierzu weist gemäß Fig. 9 die Arretierung 46 einen schwenkbar gelagerten, klinkenartigen Haken 82 auf, der mittels einer Druckfeder 84 federvorgespannt ist, so dass er beim Vorwärtsbewegen des Batterieblocks 14 bzw. des Batteriewagens 42 mit der Öffnung 44 in Eingriff kommt und deren Rand verriegelnd hintergreift. Wie aus Fig. 2 ersichtlich, kann der Haken entgegen der Federvorspannkraft durch einen Auslösehebel 86 nach oben verschwenkt werden, so dass er den Batteriewagen 42 wieder freigibt. Die Betätigung des Hebels 86 erfolgt in der Regel durch eine Bedienperson mit dem Fuß.

Wenn der Batterieblock 14 vollständig auf dem Wechseladapter 22 aufgenommen ist, wie dies in Fig. 7a dargestellt ist, kann der Wechseladapter 22 vom Niveau H über der theoretischen Referenzlinie R auf ein Niveau h' über der theoretischen Referenzlinie R abgesenkt werden (Fig. 7b), so dass die Kopplung zwischen Zentrierbolzen 58 und Batteriefachbodenöffnung 62 gelöst wird. Anschließend kann der Wechseladapter samt darauf aufgenommenem Batterieblock 22 vom Flurförderzeug weggefahren werden vermittels des Handhubwagens 24.

Sofern der Batterieblock 14 in einem gesonderten Batteriewagen 42 aufgenommen ist, kann der Batterieblock beispielsweise durch ein Hebezeug oder einen Kran aus dem Batteriewagen 42 vom Wechseladapter 22 entfernt werden, wie dies schematisch in Fig. 10 angedeutet ist. Hierdurch kann beispielsweise ein defekter Batterieblock 14 ausgetauscht werden. Sobald ein frischer Batterieblock 14 im Batteriewagen 42 eingesetzt worden ist, kann der Batterieblock 14 zusammen mit dem Wechseladapter 22 an ein Flurförderzeug mit leerem Batteriefach angedockt bzw. angekoppelt werden, und der Batterieblock kann zusammen mit dem Batteriewagen 42 entlang den Führungsprofilen 36a, 36b und 50a, 50b in das Batteriefach gerollt werden. Sobald der Batteriewagen an einem hinteren Anschlag im Batteriefach angekommen ist, wird der Wechseladapter 22 erneut abgesenkt, um die Kopplung mit dem Flurförderzeug zu lösen und um den Batterieblock abzusenken, so dass er mit seinem Rand am zweiten Ende 40 bzw. mit dem Rand des Batteriewagens 42 auf dem Batteriefachboden aufliegt, wobei die Rollen 38a, 38b des zweiten Endes, wie bereits beschrieben, in einen Ausschnitt im Batteriefachboden hinein abstehen.

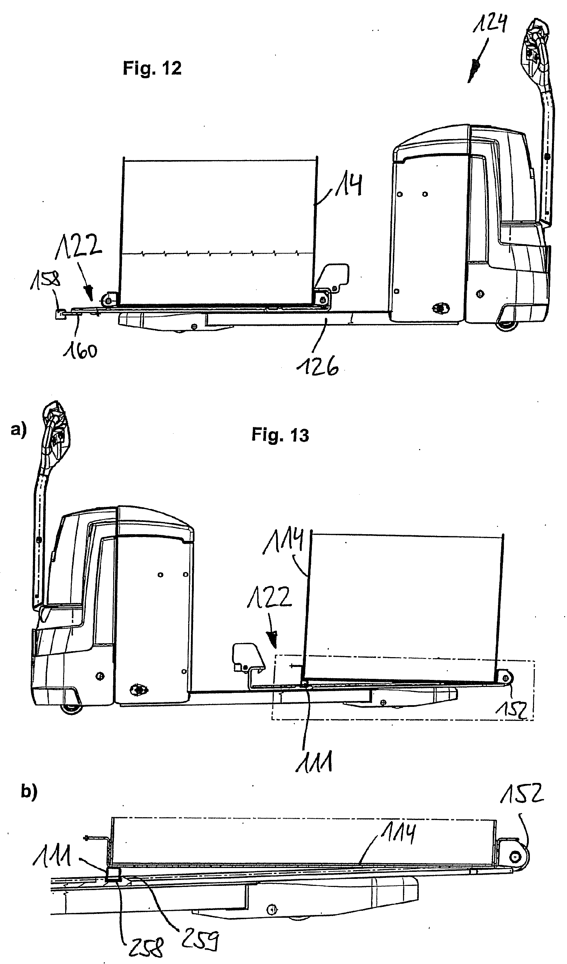

Fig. 12 zeigt einen fest mit einem elektrischen Handgabelhubwagen 124 verbundenen Wechseladapter 122. Der Wechseladapter 122 ist dabei mit den Lastgabeln 126 des Handgabelhubwagens 124 vorzugsweise verschraubt oder verschweißt. Der Wechseladapter 122 weist an seinem bezogen auf die Fig. 12 linken Ende einen Zentrierdorn 158 auf, der mittels eines Flansches 160 am Wechseladapter 122 angeordnet ist. Allerdings kann der Zentrierdorn 158 zusammen mit dem Flansch 160 vom Wechseladapter 122 entfernt werden, so dass ein Wechseladapter 122 gebildet wird, wie er in Fig. 13 dargestellt ist. Auf dem Wechseladapter 122 der Fig. 13a) ist ein Batterieblock 114, wie er aus dem Stand der Technik bekannt ist (siehe Fig. 11 und zugehörige einleitende Beschreibung), aufgenommen. Dabei steht der Batterieblock 114 mit einem an seiner Unterseite angebrachten Kopplungsvorsprung 111 in Eingriff mit einer am Wechseladapter 122 vorgesehenen Ausnehmung oder Nut 258, wie dies aus der vergrößerten Teilansicht der Fig. 13 ersichtlich ist. Die Nut 258 verläuft quer zur Batterieverschieberichtung und ermöglicht eine sichere Kopplung zwischen dem Batterieblock 114 und dem Wechseladapter 122, da der Kopplungsvorsprung 111 aufgrund des hohen Batteriegewichts nicht aus der Nut 258 herausspringen kann. Zur einfacheren Herstellung der Kopplung zwischen Vorsprung 111 und Nut 258 weist der Wechseladapter 122 bezogen auf die Fig. 13b) auf der rechten Seite der Nut 258 eine geneigte Führungsfläche 259 auf, an welcher ein im Flurförderzeug aufgenommener Batterieblock 115 mit seinem Kopplungsvorsprung 111 ggf. anschlägt bzw. der Batterieblock 114 durch diese geneigte Führungsfläche 259 geringfügig nach oben angehoben wird, so dass bei einer Verschiebungsbewegung des Wechseladapters 122 in Richtung des Kopplungsvorsprungs 111 eine korrekte Ausrichtung und nachfolgend korrekte Kopplung zwischen Batterieblock 114 und Wechseladapter 122 ermöglicht ist.

Der in den Fig. 12 und 13 vorgestellte Wechseladapter 122 stellt eine Art Universaladapter dar, mittels welchem sowohl Batterieblöcke 14 mit mehreren Rollen 38a, 38b, 52a, 52b, 76a, 76b aufgenommen werden können bei angebrachter erster Kopplungsvorrichtung 158 und mittels welchem auch Batterieblöcke 114 mit Kopplungsvorsprung 111 und Rollen 152 transportiert werden können.

Selbstverständlich ist bei fest am Handgabelhubwagen 124 angebrachtem Wechseladapter 122 an Lager bzw. Ladestationen für die Batterie dafür gesorgt, dass entsprechende Aufnahmen bereitstehen, auf welche die Batterieblöcke 14 bzw. 114 abgestellt werden können, ohne dass für die Lagerung der Adapter 122 erforderlich ist.

## Patentansprüche

1. Batterieblock-Wechseladapter zur Aufnahme eines aus einem Batteriefach (16) eines Flurförderzeugs (12) herauszuziehenden Batterieblocks (14, 20, 42; 114) oder zur Bereitstellung eines in das Batteriefach (16) einzuschiebenden Batterieblocks (14, 20, 42; 114), wobei der Wechseladapter (22; 122) mittels am Wechseladapter (22; 122) und am Flurförderzeug (12) vorgesehenen, miteinander zusammenwirkenden Ausrichtmitteln (56, 66; 58, 62) in einer vorbestimmten Stellung für einen Batteriewechselbetrieb relativ zum Flurförderzeug (12) ausrichtbar ist, wobei der Wechseladapter (22) im Batteriewechselbetrieb mit dem Flurförderzeug (12) mittels einer ersten Kopplungsvorrichtung (58, 62) koppelbar ist, **dadurch gekennzeichnet, dass** die erste Kopplungsvorrichtung (58, 62) zur Kopplung des Wechseladapters (22) mit dem Flurförderzeug (12) derart ausgeführt ist, dass die Kopplung beim Anheben des Wechseladapters (22) relativ zum den Batterieblock (14, 20, 42) tragenden Boden (48) des Flurförderzeugs (12) herstellbar und beim Absenken des Wechseladapters (22) lösbar ist, wobei der Wechseladapter wenigstens einen Zentrierbolzen (58) als Komponente der ersten Kopplungsvorrichtung umfasst, der beim Anheben in eine entsprechende Öffnung (62) im Boden (48) des Flurförderzeugs, insbesondere im Boden (48) des Batteriefachs (16), einführbar ist.

2. Wechseladapter nach Anspruch 1, wobei er derart ausgestaltet ist, dass im Batteriewechselbetrieb beim Bewegen des Batterieblocks (14, 20, 42) aus dem Batteriefach (16) heraus auf den Wechseladapter (22) und vom Wechseladapter (22) in das Batteriefach (16) hinein ein im Batteriefach (16) angeordneter Sicherungsanschlag (74a, 74b) überwindbar ist.

3. Wechseladapter nach einem der vorhergehenden Ansprüche, wobei er wenigstens eine Führungsbahn (36a, 36b) umfasst, welche die Bewegung von dem Batterieblock (14, 20, 42) zugeordneten Rollkörpern (38a, 38b; 76a, 76b) aus dem bzw. in das Batteriefach (16) führt, wobei vorzugsweise zwei seitlich im Abstand voneinander angeordnete Führungsbahnen (36a, 36b) vorgesehen sind, auf denen Rollkörper (38a, 38b; 76a, 76b) des Batterieblocks (14, 20, 42) bewegbar sind, und wobei er vorzugsweise derart ausgeführt ist, dass im Batteriewechselbetrieb und bei im Batteriefach (16) des Flurförderzeugs (12) aufgenommenem Batterieblock (14, 20, 42) einem ersten Ende (54) des Batterieblocks (14, 20, 42) zugeordnete Rollkörper (52a, 52b) im Batteriefach (16) abgestützt sind und einem zweiten Ende (40) des Batterieblocks (14, 20, 42) zugeordnete Roll körper (38a, 38b) auf den Führungsbahnen (38a, 38b) des Wechseladapters (22) abgestützt sind.

4. Wechseladapter nach Anspruch 3 und 2, wobei die im Batteriewechselbetrieb dem Batteriefach (16) zugewandten Endabschnitte (72a, 72b) der Führungsbahnen (36a, 36b) in Richtung vom Batteriefach (16) weg ansteigend und anschließend im Wesentlichen horizontal ausgeführt sind, derart, dass im Batteriewechselbetrieb der Batterieblock (14, 20, 42) auf dem Wechseladapter (22) höher liegt als im Batteriefach (16), wodurch der Sicherungsanschlag (74a, 74b) überwindbar ist.

5. Wechseladapter nach einem der vorhergehenden Ansprüche, wobei er eine lösbare Arretierung (44, 82, 84) aufweist, mit welcher ein auf den Wechseladapter (22) aufgenommener Batterieblock (14, 20, 42) in Eingriff bringbar ist oder steht.

6. Wechseladapter nach Anspruch 1, wobei die erste Kopplungsvorrichtung (158) lösbar mit dem Wechseladapter (122) verbunden ist.

7. Wechseladapter nach Anspruch 6, wobei der Wechseladapter (122) im Batteriewechselbetrieb mit dem Batterieblock (114) mittels einer zweiten Kopplungsvorrichtung (258) koppelbar ist, wobei die zweite Kopplungsvorrichtung (258) vorzugsweise derart ausgeführt ist, dass die Kopplung zwischen Wechseladapter (122) und Batterieblock (114) beim Anheben des Wechseladapters (122) relativ zum den Batterieblock (114) tragenden Boden des Flurförderzeugs herstellbar ist und beim Absenken des Wechseladapters (122) lösbar ist, wobei die zweite Kopplungsvorrichtung (258) weiter vorzugsweise eine quer zur Bewegungsrichtung des Batterieblocks verlaufenden Aufnahmevertiefung (258) aufweist, mit welcher ein an der Unterseite des Batterieblocks (114) vorgesehener Kopplungsvorsprung (111) in Eingriff bringbar ist.

8. Wechseladapter nach einem der vorhergehenden Ansprüche, wobei er auf einem gesonderten Flurförderzeug, insbesondere Handhubwagen (24), aufnehmbar oder aufgenommen ist, insbesondere mit diesem fest verbunden ist.

9. Batteriewechselsystem, umfassend
wenigstens ein erstes Flurförderzeug (12),
wenigstens einen Batterieblock (14, 20, 42; 114), der in ein Batteriefach (16) des ersten Flurförderzeugs (12) einschiebbar oder eingeschoben ist, wobei das Batteriefach (16) wenigstens eine seitliche Zugriffsöffnung (18) zum Einschieben des Batterieblocks (14, 20, 42; 114) mit einem ersten Ende (54) voraus in das Batteriefach (16) und zum Herausziehen des Batterieblocks (14, 20, 42; 114) mit seinem ersten Ende (54) hintan aus dem Batteriefach (16) aufweist, wobei der im Batteriefach (16) aufgenommene Batterieblock (14, 20, 42; 114) in der Nähe seines ersten Endes (54) mit wenigstens einem Rollkörper (52a, 52b; 152) auf dem Boden (48) des Batteriefachs (16) abstützbar ist, und
wenigstens eine Transporteinrichtung (24; 124), auf welcher der Batterieblock (14, 20, 42; 114) aufnehmbar und vom bzw. zum Flurförderzeug (12) bewegbar ist,
**dadurch gekennzeichnet, dass** die Transporteinrichtung (24; 124) einen Wechseladapter (22; 122) nach einem der vorhergehenden Ansprüche umfasst, der mittels am Wechseladapter (22; 122) und am Flurförderzeug (12) angeordneten, miteinander zusammenwirkenden Ausrichtmitteln (56, 66; 58, 62) in einer vorbestimmten Stellung für einen Batteriewechselbetrieb relativ zum Flurförderzeug (12) ausrichtbar ist, wobei der Wechseladapter (22; 122) in eine obere Anschlagstellung anhebbar ist.

10. Batteriewechselsystem nach Anspruch 9, **dadurch gekennzeichnet, dass** der Batterieblock (14, 20, 42) an einem dem ersten Ende (54) entgegengesetzten zweiten Ende (40) wenigstens einen weiteren Rollkörper (38a, 38b) umfasst, der im eingeschobenen Zustand des Batterieblocks (14, 20, 42) über die Oberseite des Batteriefachbodens (48) nach unten absteht und als Hubanschlag für den Wechseladapter (12) zum Anheben und Herausziehen des Batterieblocks (14, 20, 42) vorgesehen ist.

11. Batteriewechselsystem nach Anspruch 9 oder 10, **dadurch gekennzeichnet, dass** als Rollkörper sowohl am ersten Ende (54) als auch am zweiten Ende (40) des Batterieblocks (14, 20, 42) jeweils wenigstens zwei Rollen (38a, 38b, 52a, 52b, 76a, 76b) in seitlichem Abstand voneinander vorgesehen sind.

12. Batteriewechselsystem nach einem der Ansprüche 9 bis 11, **dadurch gekennzeichnet, dass** der Batteriefachboden (48) im Bereich der Zugriffsöffnung (18) einen Ausschnitt (66) aufweist, der den vorderen Randabschnitt des Batteriefachbodens (48) aufweist, so dass der Rollkörper bzw. das innere Rollenpaar (38a, 38b) des zweiten Endes (40) bei eingeschobenem Batterieblock (14, 20, 42) durch den Ausschnitt (66) nach unten absteht.

13. Verfahren zum Einschieben oder Herausnehmen eines Batterieblocks (14, 20, 42; 114) eines Flurförderzeugs (12) unter Verwendung eines Batteriewechselsystems nach einem der Ansprüche 9 bis 12 umfassend einen Wechseladapter (22; 122) nach einem der Ansprüche 1 bis 8, wobei das Verfahren die Schritte umfasst:
Öffnen der Zugriffsöffnung (18) des Batteriefachs (16) des Flurförderzeugs (12);
Zuführen des Wechseladapters (22; 122) vorzugsweise mittels eines zweiten Flurförderzeugs, insbesondere eines Handhubwagens (24; 124) zum Batteriefach (16);
Ausrichten des Wechseladapters (22; 122) in einer vorbestimmten Relativstellung zum Flurförderzeug (12) für den Batteriewechsel betrieb, wobei der Wechseladapter (22; 122) insbesondere in eine obere Anschlagstellung angehoben wird:
Bewegen eines im Batteriefach (16) aufgenommenen Batterieblocks (14, 20, 42; 114) auf den Wechseladapter (22; 122) oder Bewegen eines auf dem Wechseladapter (22; 122) aufgenommenen Batterieblocks (14, 20, 42; 114) in das leere Batteriefach (16);
Absenken des Wechseladapters (22; 122);
Entfernen des Wechseladapters (22; 122) mit gegebenenfalls aufgenommenem Batterieblock (14, 20, 42; 114) vom Flurförderzeug (12);

14. Verfahren nach Anspruch 13, ferner umfassend Herstellen einer Kopplung zwischen dem Wechseladapter (22) und dem Flurförderzeug (12) oder dem Batterieblock (114), welche während des Batteriewechselbetriebs wirksam ist, wobei die Kopplung durch Anheben bzw. Absenken des Wechseladapters (22) hergestellt bzw. gelöst wird.

## Claims

1. Battery pack replacement adapter for receiving a battery pack (14, 20, 42; 114) which is to be removed from a battery compartment (16) of an industrial truck (12) or for providing a battery pack (14, 20, 42; 114) which is to be inserted into the battery compartment (16), it being possible to orient the replacement adapter (22; 122) in a predetermined position for a battery replacement operation relative to the industrial truck (12) by means of mutually interacting orientation means (56, 66; 58, 62) provided on the replacement adapter (22; 122) and on the industrial truck (12), it being possible to couple the replacement adapter (22) to the industrial truck (12) by means of a first coupling apparatus (58, 62) during the battery replacement operation, **characterised in that** the first coupling apparatus (58, 62) is designed to couple the replacement adapter (22) to the industrial truck (12) such that the coupling can be produced when the replacement adapter (22) is raised relative to the base (48) of the industrial truck (12) that bears the battery pack (14, 20, 42) and can be released when the replacement adapter (22) is lowered, the replacement adapter comprising at least one centring pin (58) that is a component of the first coupling apparatus and that can be inserted during raising into a corresponding opening (62) in the base (48) of the industrial truck, in particular in the base (48) of the battery compartment (16).

2. Replacement adapter according to claim 1, wherein said adapter is designed such that a securing stop (74a, 74b) arranged in the battery compartment (16) can be overcome during the battery replacement operation when the battery pack (14, 20, 42) is moved out of the battery compartment (16) onto the replacement adapter (22) and from the replacement adapter (22) into the battery compartment (16).

3. Replacement adapter according to either of the preceding claims, wherein said adapter comprises at least one guideway (36a, 36b) which guides the movement of rolling bodies (38a, 38b; 76a, 76b) associated with the battery pack (14, 20, 42) out of or into the battery compartment (16), wherein two guideways (36a, 36b) are preferably provided which are laterally spaced apart from one another and on which rolling bodies (38a, 38b; 76a, 76b) of the battery pack (14, 20, 42) can move, and wherein said adapter is preferably designed such that, during the battery replacement operation and when the battery pack (14, 20, 42) has been received in the battery compartment (16) of the industrial truck (12), rolling bodies (52a, 52b) associated with a first end (54) of the battery pack (14, 20, 42) are supported in the battery compartment (16) and rolling bodies (38a, 38b) associated with a second end (40) of the battery pack (14, 20, 42) are supported on the guideways (38a, 38b) of the replacement adapter (22).

4. Replacement adapter according to claims 2 and 3, wherein the end portions (72a, 72b) of the guideways (36a, 36b) that face the battery compartment (16) during the battery replacement operation are designed so as to rise away from the battery compartment (16) and then to be substantially horizontal such that, during the battery replacement operation, the battery pack (14, 20, 42) is positioned higher on the replacement adapter (22) than in the battery compartment (16), as a result of which the securing stop (74a, 74b) can be overcome.

5. Replacement adapter according to any of the preceding claims, wherein said adapter has a releasable locking element (44, 82, 84), with which a battery pack (14, 20, 42) which has been received on the replacement adapter (22) can be brought into engagement or is in engagement.

6. Replacement adapter according to claim 1, wherein the first coupling apparatus (158) is releasably connected to the replacement adapter (122).

7. Replacement adapter according to claim 6, wherein the replacement adapter (122) can be coupled to the battery pack (114) by means of a second coupling apparatus (258) during the battery replacement operation, wherein the second coupling apparatus (258) is preferably designed in such a way that the coupling between the replacement adapter (122) and the battery pack (114) can be produced when the replacement adapter (122) is raised relative to the base of the industrial truck that bears the battery pack (114) and can be released when the replacement adapter (122) is lowered, wherein the second coupling apparatus (258) also preferably comprises an accommodating recess (258) which extends transversely to the movement direction of the battery pack and with which a coupling projection (111) which is provided on the lower side of the battery pack (114) can be brought into engagement.

8. Replacement adapter according to any of the preceding claims, wherein said adapter can be or is received on a separate industrial truck, in particular a manually-operated lift truck (24), in particular is rigidly connected thereto.

9. Battery replacement system, comprising
at least one first industrial truck (12),
at least one battery pack (14, 20, 42; 114) which can be or is inserted into a battery compartment (16) of the first industrial truck (12), the battery compartment (16) having at least one lateral access opening (18) for inserting the battery pack (14, 20, 42; 114), leading by a first end (54), into the battery compartment (16) and for removing the battery pack (14, 20, 42; 114), its first end (54) at the rear, from the battery compartment (16), it being possible to support the battery pack (14, 20, 42; 114) received in the battery compartment (16) on the base (48) of the battery compartment (16) by means of at least one rolling body (52a, 52b; 152) in the vicinity of the first end (54) of said battery pack, and
at least one transport device (24; 124), on which the battery pack (14, 20, 42; 114) can be received and can be moved away from and towards the industrial truck (12),
**characterised in that** the transport device (24; 124) comprises a replacement adapter (22; 122) according to any of the preceding claims, which can be oriented in a predetermined position for a battery replacement operation relative to the industrial truck (12) by means of mutually interacting orientation means (56, 66; 58, 62) arranged on the replacement adapter (22; 122) and on the industrial truck (12), it being possible for the replacement adapter (22; 122) to be raised into an upper stop position.

10. Battery replacement system according to claim 9, **characterised in that**, at a second end (40) which is opposite the first end (54), the battery pack (14, 20, 42) comprises at least one further rolling body (38a, 38b) which, in the inserted state of the battery pack (14, 20, 42), protrudes downwards beyond the upper side of the battery compartment base (48) and is provided as a lifting stop for the replacement adapter (12) for the raising and removing the battery pack (14, 20, 42).

11. Battery replacement system according to either claim 9 or claim 10, **characterised in that**, in each case, at least two rollers (38a, 38b, 52a, 52b, 76a, 76b) are provided laterally spaced apart from one another as rolling bodies both at the first end (54) and at the second end (40) of the battery pack (14, 20, 42).

12. Battery replacement system according to any of claims 9 to 11, **characterised in that** the battery compartment base (48) comprises, in the region of the access opening (18), a cutout (66) which comprises the front edge portion of the battery compartment base (48), and therefore the rolling body or the inner roller pair (38a, 38b) of the second end (40) protrudes downwards through the cutout (66) when the battery pack (14, 20, 42) is inserted.

13. Method for inserting or removing a battery pack (14, 20, 42; 114) of an industrial truck (12) using a battery replacement system according to any of claims 9 to 12 comprising a replacement adapter (22; 122) according to any of claims 1 to 8, wherein the method comprises the steps of:
opening the access opening (18) of the battery compartment (16) of the industrial truck (12); feeding the replacement adapter (22; 122) to the battery compartment (16), preferably by means of a second industrial truck, in particular a manually-operated lift truck (24; 124);
orienting the replacement adapter (22; 122) in a predetermined position relative to the industrial truck (12) for the battery replacement operation, wherein the replacement adapter (22; 122) is raised in particular into an upper stop position;
moving a battery pack (14, 20, 42; 114) received in the battery compartment (16) onto the replacement adapter (22; 122) or moving a battery pack (14, 20, 42; 114) received on the replacement adapter (22; 122) into the empty battery compartment (16);
lowering the replacement adapter (22; 122);
taking out the replacement adapter (22; 122), possibly together with the received battery pack (14, 20, 42; 114), from the industrial truck (12).

14. Method according to claim 13, further comprising producing a coupling between the replacement adapter (22) and the industrial truck (12) or the battery pack (114) which is active during the battery replacement operation, wherein the coupling is produced or released, respectively, by raising or lowering the replacement adapter (22).

## Revendications

1. Adaptateur de remplacement de bloc batterie destiné à loger un bloc batterie (14, 20, 42 ; 114) devant être extrait d'un compartiment de batterie (16) d'un chariot de manutention (12) ou à fournir un bloc batterie (14, 20, 42 ; 114) devant être introduit dans le compartiment de batterie (16), l'adaptateur de remplacement (22 ; 122) pouvant, au moyen de moyens d'orientation (56, 66 ; 58, 62) prévus sur l'adaptateur de remplacement (22 ; 122) et sur le chariot de manutention (12) et coopérant les uns avec les autres, être orienté dans une position prédéfinie pour un mode de remplacement de batterie par rapport au chariot de manutention (12), l'adaptateur de remplacement (22) pouvant, dans le mode de remplacement de batterie, être accouplé au chariot de manutention (12) au moyen d'un premier dispositif d'accouplement (58, 62),
**caractérisé en ce que**, pour l'accouplement de l'adaptateur de remplacement (22) au chariot de manutention (12), le premier dispositif d'accouplement (58, 62) est réalisé de telle sorte que l'accouplement peut être effectué lors du soulèvement de l'adaptateur de remplacement (22) par rapport au fond (48) du chariot de manutention (12) portant le bloc batterie (14, 20, 42) et être supprimé lors de l'abaissement de l'adaptateur de remplacement (22), l'adaptateur de remplacement comprenant, en tant que composant du premier dispositif d'accouplement, au moins un boulon de centrage (58) qui, lors du soulèvement, peut être introduit dans une ouverture (62) correspondante dans le fond (48) du chariot de manutention, en particulier dans le fond (48) du compartiment de batterie (16).

2. Adaptateur de remplacement selon la revendication 1, réalisé de telle sorte que, dans le mode de remplacement de batterie, lors du déplacement du bloc batterie (14, 20, 42) hors du compartiment de batterie (16) sur l'adaptateur de remplacement (22) et à partir de l'adaptateur de remplacement (22) vers l'intérieur du compartiment de batterie (16), une butée de blocage (74a, 74b) disposée dans le compartiment de batterie (16) peut être outrepassée.

3. Adaptateur de remplacement selon l'une des revendications précédentes, comprenant au moins une voie de guidage (36a, 36b) qui guide le déplacement de corps de roulement (38a, 38b ; 76a, 76b) affectés au bloc batterie (14, 20, 42) hors ou respectivement vers l'intérieur du compartiment de batterie (16), deux voies de guidage (36a, 36b) disposées de façon espacées latéralement l'une de l'autre étant de préférence prévues, sur lesquelles des corps de roulement (38a, 38b ; 76a, 76b) du bloc batterie (14, 20, 42) peuvent se déplacer, et étant de préférence réalisé de sorte que, dans le mode de remplacement de batterie et quand le bloc batterie (14, 20, 42) est logé dans le compartiment de batterie (16) du chariot de manutention (12), des corps de roulement (52a, 52b) affectés à une première extrémité (54) du bloc batterie (14, 20, 42) sont supportés dans le compartiment de batterie (16), et des corps de roulement (38a, 38b) affectés à une deuxième extrémité (40) du bloc batterie (14, 20, 42) sont supportés sur les voies de roulement (38a, 38b) de l'adaptateur de remplacement (22).

4. Adaptateur de remplacement selon les revendications 3 et 2, les tronçons d'extrémité (72a, 72b) des voies de guidage (36a, 36b) tournés vers le compartiment de batterie (16) dans le mode de remplacement de batterie montant en s'éloignant du compartiment de batterie (16) puis étant essentiellement horizontaux de telle sorte que, dans le mode de remplacement de batterie, le bloc batterie (14, 20, 42) est plus haut sur l'adaptateur de remplacement (22) que dans le compartiment de batterie (16), ce qui fait que la butée de blocage (74a, 74b) peut être outrepassée.

5. Adaptateur de remplacement selon l'une des revendications précédentes, présentant un système d'arrêt (44, 82, 84) amovible avec lequel un bloc batterie (14, 20, 42) logé sur l'adaptateur de remplacement (22) peut être mis en prise ou est en prise.

6. Adaptateur de remplacement selon la revendication 1, le premier dispositif d'accouplement (158) étant raccordé de façon amovible à l'adaptateur de remplacement (122).

7. Adaptateur de remplacement selon la revendication 6, l'adaptateur de remplacement (122) pouvant, dans le mode de remplacement de batterie, être accouplé au bloc batterie (114) au moyen d'un deuxième dispositif d'accouplement (258), le deuxième dispositif d'accouplement (258) étant de préférence constitué de telle sorte que l'accouplement entre l'adaptateur de remplacement (122) et le bloc batterie (114) peut être effectué lors du soulèvement de l'adaptateur de remplacement (122) par rapport au fond du chariot de manutention portant le bloc batterie (114) et peut être supprimé lors de l'abaissement de l'adaptateur de remplacement (122), le deuxième dispositif d'accouplement (258) présentant également de préférence une dépression de réception (258), transversale par rapport à la direction de déplacement du bloc batterie, avec laquelle une saillie d'accouplement (111) prévue sur le côté inférieur du bloc batterie (114) peut être mise en prise.

8. Adaptateur de remplacement selon l'une des revendications précédentes, pouvant être logé ou étant logé sur un chariot de manutention séparé, en particulier un transpalette, étant en particulier raccordé fixement à celui-ci.

9. Système de remplacement de batterie, comprenant au moins un premier chariot de manutention (12), au moins un bloc batterie (14, 20, 42 ; 114) qui peut être inséré ou qui est inséré dans un compartiment de batterie (16) du premier chariot de manutention (12), le compartiment de batterie (16) présentant au moins une ouverture d'accès (18) latérale pour l'insertion du bloc batterie (14, 20, 42 ; 114) avec une première extrémité (54) en premier dans le compartiment de batterie (16) et pour l'extraction du bloc batterie (14, 20, 42 ; 114) avec sa première extrémité (54) en dernier hors du compartiment de batterie (16), le bloc batterie (14, 20, 42 ; 114) logé dans le compartiment de batterie (16) pouvant s'appuyer à proximité de sa première extrémité (54) avec au moins un corps de roulement (52a, 52b ; 152) sur le fond (48) du compartiment de batterie (16), et au moins un dispositif de transport (24 ; 124) sur lequel le bloc batterie (14, 20, 42 ; 114) peut être logé ou peut être éloigné ou respectivement rapproché du chariot de manutention (12),
**caractérisé en ce que** le dispositif de transport (24 ; 124) comprend un adaptateur de remplacement (22 ; 122) selon l'une des revendications précédentes, qui, au moyen de moyens d'orientation (56, 66 ; 58, 62) disposés sur l'adaptateur de remplacement (22 ; 122) et sur le chariot de manutention (12) et coopérant les uns avec les autres, peut être orienté dans une position prédéfinie pour un mode de remplacement de batterie par rapport au chariot de manutention (12), l'adaptateur de remplacement (22 ; 122) pouvant être soulevé dans une position de butée supérieure.

10. Système de remplacement de batterie selon la revendication 9, **caractérisé en ce que** le bloc batterie (14, 20, 42) comprend, à une deuxième extrémité (40) opposée à la première extrémité (54), au moins un autre corps de roulement (38a, 38b) qui, dans l'état inséré du bloc batterie (14, 20, 42) au-dessus du côté supérieur du fond du compartiment de batterie (48), dépasse vers le bas et est prévu en tant que butée de levage pour l'adaptateur de remplacement (22) pour le soulèvement et l'extraction du bloc batterie (14, 20, 42).

11. Système de remplacement de batterie selon la revendication 9 ou 10, **caractérisé en ce que**, en tant que corps de roulement, il est prévu, aussi bien à la première extrémité (54) qu'à la deuxième extrémité (40) du bloc batterie (14, 20, 42), respectivement au moins deux rouleaux (38a, 38b, 52a, 52b, 76a, 76b) espacés latéralement l'un de l'autre.

12. Système de remplacement de batterie selon l'une des revendications 9 à 11, **caractérisé en ce que**, dans la zone de l'ouverture d'accès (18), le fond de compartiment de batterie (48) présente une découpe (66) qui présente le tronçon de bord avant du fond de compartiment de batterie (48) de telle sorte que le corps de roulement ou respectivement la paire de rouleaux (38a, 38b) intérieure de la deuxième extrémité (40) dépasse vers le bas à travers la découpe (66) quand le bloc batterie (14, 20, 42) est inséré.

13. Procédé d'insertion ou d'extraction d'un bloc batterie (14, 20, 42 ; 114) d'un chariot de manutention (12) avec utilisation d'un système de remplacement de batterie selon l'une des revendications 9 à 12, comprenant un adaptateur de remplacement (22 ; 122) selon l'une des revendications 1 à 8, le procédé comprenant les étapes suivantes :
ouverture de l'ouverture d'accès (18) du compartiment de batterie (16) du chariot de manutention (12) ;
acheminement de l'adaptateur de remplacement (22 ; 122,) de préférence au moyen d'un deuxième chariot de manutention, en particulier d'un transpalette (24 ; 124), vers le compartiment de batterie (16) ;
orientation de l'adaptateur de remplacement (22 ; 122) dans une position relative prédéfinie par rapport au chariot de manutention (12) pour le mode de remplacement de batterie, l'adaptateur de remplacement (22 ; 122) étant en particulier soulevé dans une position de butée supérieure ;
déplacement d'un bloc batterie (14, 20, 42 ; 114) logé dans le compartiment de batterie (16) sur l'adaptateur de remplacement (22 ; 122) ou
déplacement d'un bloc batterie (14, 20, 42 ; 114) logé sur l'adaptateur de remplacement (22 ; 122) dans le compartiment de batterie (16) vide ;
abaissement de l'adaptateur de remplacement (22 ; 122) ;
enlèvement, à partir du chariot de manutention (12), de l'adaptateur de remplacement (22 ; 122) avec le bloc batterie (14, 20, 42 ; 114) éventuellement logé.

14. Procédé selon la revendication 13, comprenant également la réalisation d'un accouplement entre l'adaptateur de remplacement (22) et le chariot de manutention (12) ou le bloc batterie (114), qui est actif pendant le mode de remplacement de batterie, l'accouplement étant réalisé ou respectivement supprimé par le soulèvement ou respectivement l'abaissement de l'adaptateur de remplacement (22).
